# EUROPEAN PATENT SPECIFICATION

(11) **EP 3 773 117 B1**
(45) Date of publication and mention of the grant of the patent: **02.08.2023**
(21) Application number: 19714182.3
(22) Date of filing: 26.03.2019
(51) Int. Cl.: A47L 15/00, A47L 15/42, A47L 15/48, D06F 39/04, D06F 39/00, D06F 58/20

(54) **A WASHER WITH HEAT PUMP AND THE CONTROL METHOD THEREOF**
WASCHMASCHINE MIT WÄRMEPUMPE UND STEUERVERFAHREN DAFÜR
LAVE-LINGE DOTÉ D'UNE POMPE À CHALEUR ET SON PROCÉDÉ DE COMMANDE

(30) Priority: 02.04.2018 TR 201804609
(43) Date of publication of application: 17.02.2021
(73) Proprietor: Arçelik Anonim Sirketi, 34445 Istanbul (TR)
(72) Inventor: POYRAZ, Onur, 34950 ISTANBUL (TR); GULSEN, Deha, 34950 ISTANBUL (TR); SAGLICAN, Emre, 34950 ISTANBUL (TR); AYDINTUG, Cetin, 34950 ISTANBUL (TR); AKKAS, Nevin, 34950 ISTANBUL (TR)
(86) International application number: PCT/EP2019/057554
(87) International publication number: WO 2019/192882

(56) References cited:
- EP-A1- 3 241 943
- EP-A2- 2 682 037
- WO-A1-2017/089906
- DE-A1-102007 038 351
- DE-A1-102008 054 834
- US-A1- 2011 239 673
- US-A1- 2015 308 699

## Description

The present invention relates to a washer having a collection container in which water condensing on a heat exchanger is collected.

In washers with heat pump, heat is drawn from the environment preferably by means of at least one heat exchanger, and the drawn heat is used to heat the washing water or to heat the drying air. The surface of the heat exchanger is cooler than the environment in order to be able to draw heat from the environment, thereby providing heat gradient, enabling heat transfer from the environment to the heat exchanger. The amount of heat drawn by the heat exchanger increases as the heat gradient rises. Since the environment air temperature is in the range of 20 to 25 degrees Celsius in domestic conditions, the amount of heat drawn from the environment by the heat exchanger is limited. This also delimits the heat pump efficiency, as well as the cycle durations of the washer. Due to the fact that ambient temperature cannot be controlled and changed by the washer, efficiency is increased by enabling the heat exchanger surface to be cooler as the actual state by optimizing the coolant fluid flowing through the heat exchanger. Humidity in the ambient air condenses on the heat exchanger by making the heat exchanger cooler, and the water collecting on the heat exchanger reduces its heat transfer capacity. Using collection containers to collect the water condensing on a heat exchanger is known in the art. Water collected in collection containers is discharged after completion of the washing process, or is enabled to be introduced to the washing cycle, saving water. Although the water condensing on a heat exchanger is collected in a collection container, this solution does not fully resolve the above-mentioned problem of increasing the amount of transferred heat.

State of the art European patent application no. EP2682037 discloses a washer in which the water condensing on a heat exchanger is transmitted from a collection container to a chamber and used as washing water.

State of the art Germany patent application no. DE102007038351 discloses a hot water device which comprises at least one water container, a water inlet and a water outlet, a heating means and a metal body for heat storage, this comprising at least one phase transition material.

State of the art European patent application no. EP3241943 discloses a process air circuit for circulation process air, the process air circuit comprising a treatment chamber having an air inlet opening.

State of the art International patent application no. WO2017089906 discloses a household appliance with a reversible heat pump.

State of the art United States application no. US2011239673 discloses generally relates to appliances, and more particularly to a water heater storage tank that contains a phase change material.

State of the art Germany patent application no. DE102008054834 discloses optimizing the energy balance of household appliances that require at least in phases the heated water required for the respective work process to carry out their work processes or work cycles, and relates to a heat recovery device and a method for heat recovery for process water of a household device .

State of the art United States patent application no. US2015308699 discloses the household appliances comprising a heat pump for more efficiently heating operational liquids, such as washing or cleaning fluids.

State of the art United States patent application no. US2011120511 discloses a washer in which zeolite is used to dehumidify the air circulating during the drying process.

State of the art international patent application no. WO2016004990 discloses a collection container in which the water condensing on a heat exchanger is collected, and a washer determining how to use the water in the collection container according to washing steps.

The aim of the present invention is to realize a washer with enhanced heat pump efficiency.

The washer realized to achieve the aim of the present invention and disclosed in the claims, comprises a collection container in which the water condensing on a heat exchanger drawing heat from the environment is collected, comprising a material releasing heat upon interaction with water. The present invention provides the heat gradient required to increase the heat pump's efficiency. The water collected in the collection container by draining from the heat exchanger contacts the material in the collection container, and consequently the material exhibits an exothermic reaction and releases heat to the outer environment. The temperature of the environment air thus increases, enabling the heat exchanger to draw a higher amount of heat more rapidly from the environment. The heat released by means of the material in the collection container, is used also in different parts of the washer, increasing the efficiency of the washer.

In an embodiment of the invention, the material provided in the collection container is zeolite. Upon contact with water, zeolite exhibits an exothermic reaction, releasing heat to the environment. In addition, zeolite can be dehumidified by heating and can be used repeatedly.

In another embodiment of the invention, the washer comprises at least one heating means provided in the collection container, enabling regenerating the material by heating it. As water fills into the collection container, the material reaches saturation and continues releasing heat only for a limited time. In this state, the heating means is activated, heating the material and evaporating the water in the collection container. The material is thus rendered reusable for later cycles. In different versions of this embodiment, the heating means may be a resistance heater or the hot tubes conveying the coolant of the heat pump.

According to the invention, the washer comprises at least one duct enabling directing the heat released by the interaction between the material in the collection container and water. Efficiency can be increased by using the heat released as explained above in other parts of the washer. In different versions of this embodiment, a fan is used to enable air flow in the duct. Heat is directed to different parts of the washer by means of only the duct, or of both the duct and the fan.

In another embodiment of the invention, the washer comprises a drying compartment in which the steam rising from the washed items are condensed, and the duct extends through the collection container to the drying compartment. By this, the heat released by means of the material enables the washed items to be dried more rapidly, increasing efficiency by saving time. Air flow towards the drying compartment can be provided in the duct by means of the fan to transmit heat more rapidly.

In another embodiment of the invention, the duct extends to the heat exchanger used in heating the washing water. This embodiment aims to heat the washing water more quickly by employing the heat generated by means of the material. Likewise the former embodiment, air may be blown into the duct by means of the fan to transmit heat more rapidly. Furthermore, heat can be transferred to both the heat exchanger and the drying compartment simultaneously by means of a branched duct extending to a plurality of destinations by using the duct of this embodiment together with the duct of the former embodiment.

In different embodiments of the invention, a flap is used in the washer, enabling the heat and the air conveyed in the duct to be blocked or allowed to advance. When heat is not required to be routed to the drying compartment or to the heat exchanger, the flap blocks the duct, inhibiting heat transmission. In the case in which the duct extends to a plurality of regions, destination of heat transmission is controlled by the flap.

The control method of the invention comprises the steps of using the heat released by means of the material provided in the collection container in one or more washing steps. Energy is saved by using the released heat to heat the washing water and thereby employing this heat in washing steps such as main washing or pre-washing. Time is also saved by drying the washed items more quickly by means of using the released heat in drying step. The released heat can also be used in washing steps by directing it to the washing space in which the washing process is performed, and realizing the pre-heating process for the items to be washed. Likewise, the humidity and the heat released in regeneration of the material can also be used in washing steps, for example by heating the air around the heat exchanger to enhance efficiency of the heat pump. The efficiency of the heat pump can also be improved by performing said regeneration process at the begin of the washing process.

In another embodiment of the invention, the control method comprises the step of using the water heated due to the exothermic reaction of the material in the collection container, in one or more washing steps, in addition to the use of the released heat. Water is saved by introducing the heated water in the collection container to the washing process, as well as saving energy as this water is warmer than the mains water. Similar to enhancing the heat exchanger efficiency by directing the released heat on the heat exchanger, the efficiency of the heat pump is improved by enabling the water to transfer its heat to the heat exchanger by routing the heated water in the collection container on the heat exchanger. Energy efficiency can also be improved by directing the heated water on both of the heat exchangers drawing heat from the outer environment or transferring the drawn heat to the washing water.

The efficiency of a heat pump is enhanced by means of the washer of the invention by obtaining heat by an exothermic reaction without consuming additional energy. In addition, by enabling the water condensing on the heat exchanger which is cooler than the mains water, to be heated without consuming energy, it is enabled to be used efficiently in various washing steps. Performing the regeneration of the material at the begin of the washing process enables the heat pump to operate with high efficiency from start by being able to obtain heat until the environment air condenses on the heat exchanger.

The washer realized to achieve the aims of the present invention is illustrated in the accompanying drawing, wherein:

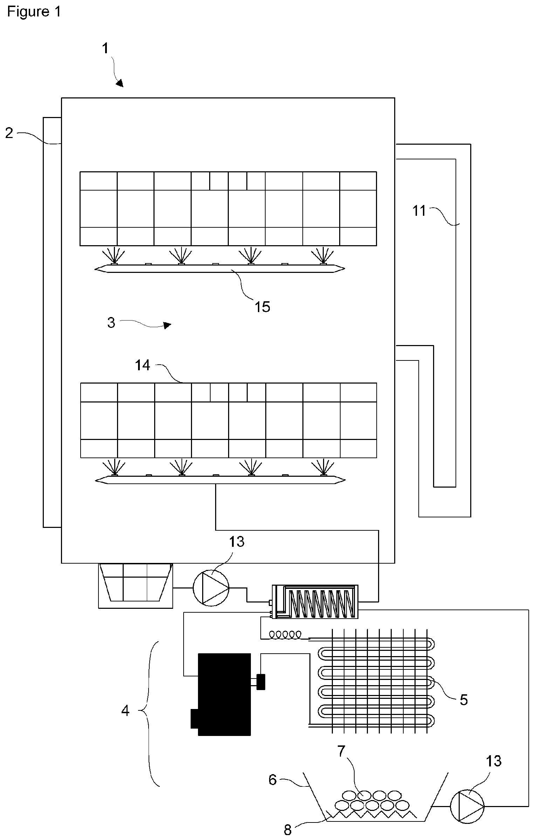

Figure 1 is a schematic view of the washer.

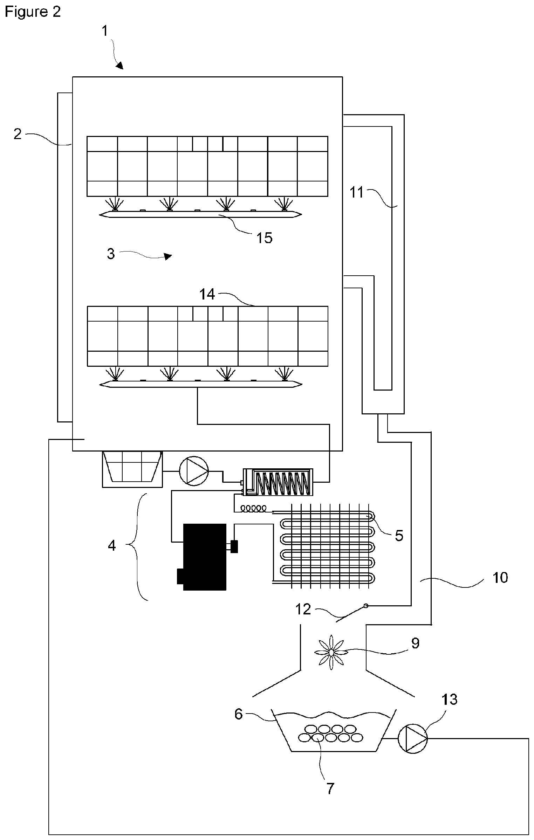

Figure 2 is a schematic view of the washer of another embodiment.

The elements in the figure are numbered individually and the correspondence of these numbers are given hereinafter.
1- Washer
2- Body
3- Washing space
4- Heat pump
5- Heat exchanger
6- Collection container
7- Material
8- Heating means
9- Fan
10- Duct
11- Drying compartment
12- Flap
13- Pump
14- Basket
15- Spray arm

The washer (1) comprises a body (2), a washing space (3) provided in the body (2), in which the washing and rinsing processes are performed, a heat pump (4) enabling heating the water to be used in the washing process, having at least one heat exchanger (5), and a collection container (6) in which the water condensing on the heat exchanger (5) is collected. The heat exchanger (5) is used in heating the washing water by drawing heat from the environment. The external surface of the heat exchanger (5) is cold for it to be able to draw heat from the environment, therefore the humidity on the outer environment air condenses on the heat exchanger (5). The water condensing on the heat exchanger (5) is collected in the collection container (6). In a washer (1) which is a dishwasher, the washing space (3) is all areas where the washing water contacts and circulates, and in a washer (1) which is a washing machine, the washing space (3) is a tub in which the laundry items are placed. Water is transferred in the washer (1) by means of at least one pump (13). A washer (1) which is a dishwasher is provided with at least one basket (14) in which the items to be washed are placed, and at least one spray arm (15) spraying water on the items in the basket (14).

The washer (1) of the invention comprises a collection container (6) having a material (7) releasing heat upon interacting with water. Water begins collecting in the collection container (6) once the washer (1) starts operating. Upon water contacting the material (7) in the collection container (6), a chemical reaction begins on the material (7), and heat is released as a result of said reaction. The released heat enables heating the air around the heat exchanger (5) by rising, thereby increasing the temperature difference between the heat exchanger (5) and the ambient air. The rising temperature difference causes the amount of heat drawn by the heat exchanger (5) from the environment to increase, or in other terms the heat pump (4) efficiency increases. In addition, the water collecting in the collection container (6) also heats up and its temperature rises.

In an embodiment of the invention, the material (7) is zeolite. Zeolite is one of the materials (7) which exhibit an exothermic reaction upon contact with water, and is used in enhancing the efficiency of the heat pump (4) as it can be repeatedly reused by being heated after reacting with water.

In another embodiment of the invention, the washer (1) comprises at least one heating means (8) provided in the collection container (6), enabling regenerating the material (7). The water condensing on the heat exchanger (5) fills the collection container (6), and the material (7) in the collection container (6) which is zeolite or the like, stops generating heat by reaching saturation. A heating means (8) provided in the collection container (6) heats and evaporates the water remaining in the collection container (6) and the water in the material (7). The material (7) can thus be reused in later washing cycles. The heating means (8) may be a resistance heater, as well as hot compressor (not shown in the figures) tubes conveying the coolant being circulated in the heat pump (4). In another embodiment of the invention, the heating means (8) may be the tubes conveying the hot washing water.

According to the invention, the washer (1) comprises at least one duct (10) enabling directing the heat rising over the collection container (6). The heat released from the interaction between the material (7) and water, spreads into the washer (1) and enables the heat pump (4) to draw heat more rapidly from the outer environment by heating the ambient air. A desired efficiency may not be fully obtained as the heat spreads evenly in the ambient air. Directing the released heat to a certain region by means of the duct (10) enables improving efficiency by avoiding heat to be lost in the washer (1).

In another embodiment of the invention, the washer (1) comprises at least one fan (9) to provide air flow in the duct (10). The fan (9) enables air to flow more rapidly in the duct (10).

In another embodiment of the invention, the washer (1) comprises a drying compartment (11) provided in the body (2), on which the steam rising from the washed items are condensed, and the duct (10) extends through the collection container (6) to the drying compartment (11). After completion of the washing process, the steam rising from the washed items is directed to the drying compartment (11) and is condensed in the drying compartment (11). The dehumidified air is circulated between the washing space (3) and the drying compartment (11), enabling drying the washed items. Drying duration is shortened by directing the heat and/or the water released from interaction of the material (7) with water, to the drying compartment (11) by means of the fan (9) and/or the duct (10).

In another embodiment of the invention, the duct (10) extends through the collection container (6) to the heat exchanger (5) enabling heating the washing water. The duct (10) extending to the heat exchanger (5) enabling heating the washing water, enables the heat released from interaction of the material (7) and water to be used in heating the washing water.

In another embodiment of the invention, the washer (1) comprises at least one flap (12) provided in the duct (10), enabling directing the heat to the drying compartment (11) or to the heat exchanger (5). The heat released by the material (7) is not used when not required by means of the flap (12) provided in the duct (10), inhibiting the heat from advancing in a given direction by covering a portion or all of the duct (10). In the case in which the duct (10) extends both to the drying compartment (11) and to the heat exchanger (5), the flap (12) acts as a valve, enabling directing the heat to only one region.

The control method of the invention is adapted to be used with the washer (1) disclosed in the embodiments above, and enables the heat released from the interaction between water and the material (7) in the collection container (6), to be used in any one of or in a plurality of the washing steps. The heat released from the interaction of the material (7) and water is used in washing steps such as pre-washing, main washing, rinsing or drying, by being directly directed or by improving the heat pump (4) efficiency by heating the ambient air.

In another embodiment of the invention, the control method comprises the step of using the released heat in the drying step by means of the fan (9) or the duct (10). As explained above, the heat released from the interaction of the material (7) in the collection container (6) with water, is used in drying the washed items by being directed to the drying compartment (11) or directly to the washing space (3).

In another embodiment of the invention, the control method comprises the step of using the released heat in improving the heat exchanger (5) efficiency by directing the heat onto the heat exchanger (5). The heat exchanger (5) efficiency is improved by routing the released heat onto the heat exchanger (5) drawing heat from outside. The washer (1) efficiency is improved by enabling the washing water to be heated more quickly by means of routing the heat onto the heat exchanger (5) enabling heating the washing water. In another version of the embodiment, the released heat is used in defrosting the heat exchanger (5), enabling the heat exchanger (5) to be defrosted quickly.

In another embodiment of the invention, the control method comprises the step of performing the regeneration process of the material (7) at the begin of the washing process. Similar to heat being released from interaction of the material (7) with water, heat is also released when the heating means (8) operates during regeneration and evaporates the water in the collection container (6) and/or the water in the material (7). Performing the regeneration process at the begin of the washing process causes condensation on the heat exchanger (5) surface, releasing heat before collecting water in the collection container (6), and this released heat is directed on the heat exchanger (5), enabling the hat exchanger (5) to draw heat from the outer environment in a higher rate/more rapidly, increasing its efficiency.

In another embodiment of the invention, the control method comprises the step of using the water heated in the collection container (6) by interacting with the material (7), in any one of or in a plurality of the washing steps. The heat released from the interaction of the material (7) and water, increases the temperature of the water collected in the collection container (6), and heats the water. Using said water which in the state of the art is removed from the washer (1) by being discharged, in washing steps enables saving water, and energy is also saved as this water is already heated to an extent by means of the material (7). For example, the heated water can be used in softening the stains on the items to be washed by introducing it to the prewashing step, or in rinsing the washed items by being introduced to the washing space in the rinsing step. When rinsing is performed at a lower temperature than a temperature value preferred in the washing process, the water in the collection container (6) can be used without requiring to be further heated.

In another embodiment of the invention, the control method comprises the step of routing the water heated in the collection container (6) to the washing space (3). The water collected in the collection container (6), whose temperature is increased by means of the material (7), is routed to the washing space (3) to be used in the washing process, or in cleaning the washing space (3). In the example where the washer (1) is a dishwasher, the water in the collection container (6) can be used to clean the filter retaining the residual dirt released from the washed items, thereby saving water and heating energy.

In another embodiment of the invention, the control method comprises the step of routing the water heated in the collection container (6) onto the heat exchanger (5). Similar to directing the heat released by means of the material (7) onto the heat exchanger (5), routing also the water heated in the collection container (6) onto the heat exchanger (5) enables the heat exchanger (5) to draw heat from the heated water. Applying this embodiment also during defrosting performed in case of frost formation on the heat exchanger (5), enables the heat exchanger (5) to be defrosted quickly.

In another embodiment of the invention, the control method comprises the step of routing the water heated in the collection container (6) onto the heat exchanger (5) heating the washing water. In this embodiment, the heated water is routed onto the heat exchanger (5), enabling the water to transfer its heat to the heat exchanger (5). By this, the heat of the heated water is utilized in cases when the water collected in the collection container (6) is not desired to be introduced in a washing cycle.

In the washer (1) of the invention, advantage is achieved by obtaining heat from the water collected in a collection container (6), which is usually discharged without being used, by using a material (7) releasing heat to the environment upon contact with water in the collection container (6). Directing the released heat to various points/regions in the washer (1) provides advantages such as improving the heat pump (4) efficiency or accelerating the drying step. Likewise, introducing the water heated by means of the material (7) in the collection container (6), to washing steps, or utilizing its heat in operations such as defrosting by directing the heated water onto heat exchangers (5), enables saving energy and water in washing cycles and saving time by shortening the washing steps.

## Claims

1. A washer (1) **comprising** a body (2), a washing space (3) provided in the body (2), in which washing and rinsing processes are performed, a heat pump (4) to heat the water to be used in the washing process, having at least one heat exchanger (5), and a collection container (6) in which the water condensing on a heat exchanger (5) is collected, **characterized by** the collection container (6) comprising a material (7) releasing heat upon interacting with water and at least one duct (10) enabling directing the heat rising from the collection container (6) to other parts of the washer.

2. A washer (1) according to claim 1 **characterized by** at least one heating means (8) provided in the collection container (6), enabling regenerating the material (7).

3. A washer (1) according to claim 1 or 2, **characterized by** at least one fan (9) enabling providing air flow in the duct (10).

4. A washer (1) according to any one of the preceding claims, **characterized by** a drying compartment (11) provided in the body (2), on which the steam rising from the washed items are condensed, and by the duct (10) extending through the collection container (6) to the drying compartment (11).

5. A washer (1) according to any one of the preceding claims **characterized by** the duct (10) extending through the collection container (6) to the heat exchanger (5) enabling heating the washing water.

6. A washer (1) according to claim 4 or 5, **characterized by** at least one flap (12) provided in the duct (10), enabling directing the heat to the drying compartment (11) or to the heat exchanger (5).

7. A control method adapted to be used with the washer (1) according to any one of the preceding claims, **characterized by** using the heat released from the interaction between water and the material (7) in the collection container (6), in any one of or in a plurality of the washing steps and using the released heat in the drying step by means of the duct (10) and optionally the at least one fan (9) if provided.

8. A control method according to claim 7, **characterized by** using the released heat in improving the heat exchanger (5) efficiency by directing the heat onto the heat exchanger (5).

9. A control method according to claim 7 or 8, **characterized by** performing the regeneration process of the material (7) at the begin of the washing process.

10. A control method according to any one of the claims 7 to 9, **characterized by** using the water heated in the collection container (6) by interacting with the material (7), in any one of or in a plurality of the washing steps.

11. A control method according to claim 10, **characterized by** routing the water heated in the collection container (6) to the washing space (3).

12. A control method according to claim 10 or 11, **characterized by** routing the water heated in the collection container (6) onto the heat exchanger (5).

## Patentansprüche

1. Eine Waschmaschine (1) umfasst einen Körper (2), einen im Körper (2) vorgesehenen Waschraum (3), in dem Wasch- und Spülvorgänge durchgeführt werden, eine Wärmepumpe (4) zum Erhitzen des im Waschprozess zu verwendenden Wassers, mit mindestens einem Wärmetauscher (5) und einem Sammelbehälter (6), in dem das an einem Wärmetauscher (5) kondensierende Wasser gesammelt wird, **gekennzeichnet ist es dadurch**, dass der Sammelbehälter (6) ein Material (7) umfasst, das bei Wechselwirkung mit Wasser Wärme abgibt, und mindestens einen Kanal (10), der es ermöglicht, die vom Sammelbehälter (6) aufsteigende Wärme zu anderen Teilen der Waschmaschine zu leiten.

2. Eine Waschmaschine (1), wie in Anspruch 1 aufgeführt, **ist dadurch gekennzeichnet, dass** im Sammelbehälter (6) mindestens eine Heizeinrichtung (8) vorgesehen ist, die eine Regeneration des Materials (7) ermöglicht.

3. Eine Waschmaschine (1), wie in den Ansprüchen 1 oder 2 aufgeführt, **ist dadurch gekennzeichnet, dass** mindestens ein Ventilator (9) die Bereitstellung eines Luftstroms im Kanal (10) ermöglicht.

4. Eine Waschmaschine (1), wie in einem der vorherigen Ansprüchen aufgeführt, **ist dadurch gekennzeichnet, dass** im Körper (2) ein Trockenraum (11) vorgesehen ist, an dem der vom Spülgut aufsteigende Dampf kondensiert, und durch den Kanal (10), der durch den Sammelbehälter (6) zum Trockenraum (11) führt.

5. Eine Waschmaschine (1), wie in einem der vorherigen Ansprüchen aufgeführt, **ist dadurch gekennzeichnet, dass** die Leitung (10) durch den Sammelbehälter (6) zum Wärmetauscher (5) verläuft und eine Erwärmung des Waschwassers ermöglicht.

6. Eine Waschmaschine (1), wie in den Ansprüchen 4 oder 5 aufgeführt, **ist dadurch gekennzeichnet, dass** im Kanal (10) mindestens eine Klappe (12) vorgesehen ist, die es ermöglicht, die Wärme zum Trockenraum (11) oder zum Wärmetauscher (5) zu leiten.

7. Ein Steuerverfahren, das zur Verwendung mit der Waschmaschine (1) nach einem der vorhergehenden Ansprüche geeignet ist, ist **dadurch gekennzeichnet, dass** durch Nutzung der bei der Wechselwirkung zwischen Wasser und dem Material (7) im Sammelbehälter (6) freigesetzten Wärme, in einem oder in mehreren Waschschritten und Nutzung der im Trocknungsschritt freigesetzten Wärme mittels Kanal (10) und optional des mindestens einen Ventilators (9), sofern vorhanden.

8. Ein Steuerverfahren, wie in Anspruch 7 aufgeführt, **ist dadurch gekennzeichnet, dass** durch Nutzung der freigesetzten Wärme die Effizienz des Wärmetauschers (5) verbessert wird, indem die Wärme auf den Wärmetauscher (5) geleitet wird.

9. Ein Steuerverfahren, wie in Anspruch 7 oder 8 aufgeführt, **ist dadurch gekennzeichnet, dass** durch Nutzung der freigesetzten Wärme die Effizienz des Wärmetauschers (5) verbessert wird, indem die Wärme auf den Wärmetauscher (5) geleitet wird.

10. Ein Steuerverfahren, wie in den Ansprüchen 7 bis 9 aufgeführt, **ist dadurch gekennzeichnet, dass** die Verwendung des im Sammelbehälter (6) durch Wechselwirkung mit dem Material (7) erhitzten Wassers in einem oder mehreren der Waschschritte erfolgt.

11. Ein Steuerverfahren, wie in Anspruch 10 aufgeführt, **ist dadurch gekennzeichnet, dass** das im Sammelbehälter (6) erwärmte Wasser zum Waschraum (3) geleitet wird.

12. Ein Steuerverfahren, wie in Anspruch 10 oder 11 aufgeführt, **ist dadurch gekennzeichnet, dass** das im Sammelbehälter (6) erwärmte Wasser auf den Wärmetauscher (5) geleitet wird.

## Revendications

1. Une laveuse (1) **comprenant** un corps (2), un espace de lavage (3) prévu dans le corps (2), dans lequel les processus de lavage et de rinçage sont effectués, une pompe à chaleur (4) pour chauffer l'eau à utiliser dans le processus de lavage, ayant au moins un échangeur de chaleur (5), et un récipient de collecte (6) dans lequel l'eau se condensant sur l'échangeur de chaleur (5) est collectée, et un récipient de collecte (6) dans lequel l'eau se condensant sur l'échangeur de chaleur (5) est recueillie, **caractérisé par le fait que** le récipient de collecte (6) comprend un matériau (7) libérant de la chaleur lors de l'interaction avec l'eau et au moins un conduit (10) permettant de diriger la chaleur s'élevant du récipient de collecte (6) vers d'autres parties du lave-linge.

2. Un laveuse (1) selon la déclaration 1 **caractérisée par** au moins un moyen de chauffage (8) prévu dans le récipient de collecte (6), permettant de régénérer le matériau (7).

3. Un laveuse (1) selon la déclaration 1 ou 2, **caractérisée par** au moins un ventilateur (9) permettant de fournir un flux d'air dans le conduit (10).

4. Un laveuse (1) selon l'une quelconque des déclarations précédentes, **caractérisée par** un compartiment de séchage (11) prévu dans le corps (2), sur lequel la vapeur s'élevant des articles lavés est condensée, et par le conduit (10) s'étendant à travers le récipient de collecte (6) jusqu'au compartiment de séchage (11).

5. Un laveuse (1) selon l'une quelconque des déclarations précédentes , **caractérisée par** le conduit (10) s'étendant à travers le récipient de collecte (6) jusqu'à l'échangeur de chaleur (5) permettant de chauffer l'eau de lavage.

6. Un laveuse (1) selon la déclaration 4 ou 5, **caractérisée par** au moins un volet (12) prévu dans le conduit (10), permettant de diriger la chaleur vers le compartiment de séchage (11) ou vers l'échangeur de chaleur (5).

7. Une méthode de contrôle adaptée pour être utilisée avec le laveur (1) selon l'une quelconque des déclarations précédentes, **caractérisée par** l'utilisation de la chaleur libérée par l'interaction entre l'eau et le matériau (7) dans le récipient de collecte (6), dans l'une quelconque ou dans une pluralité d'étapes de lavage et l'utilisation de la chaleur libérée dans l'étape de séchage au moyen d'un conduit (10) et éventuellement d'au moins un ventilateur (9) s'il en est pourvu.

8. Une méthode de contrôle selon la déclaration 7, **caractérisée par** l'utilisation de la chaleur libérée dans l'amélioration de l'efficacité de l'échangeur de chaleur (5) en dirigeant la chaleur sur l'échangeur de chaleur (5).

9. Une méthode de contrôle selon la déclaration 7 ou 8, **caractérisée par** l'exécution du processus de régénération du matériau (7) au début du processus de lavage.

10. Une méthode de contrôle selon l'une quelconque des déclarations 7 à 9, **caractérisée par** l'utilisation de l'eau chauffée dans le récipient de collecte (6) par interaction avec le matériau (7), dans l'une quelconque ou dans une pluralité des étapes de lavage.

11. Une méthode de contrôle selon la déclaration 10, **caractérisée par** l'acheminement de l'eau chauffée dans le récipient de collecte (6) vers l'espace de lavage (3).

12. Une méthode de contrôle selon la déclaration 10 ou 11, **caractérisée par** l'acheminement de l'eau chauffée dans le récipient de collecte (6) sur l'échangeur de chaleur (5).
